(19) **Europäisches Patentamt / European Patent Office / Office européen des brevets**

(11) **EP 2 443 404 B1**

(12) **EUROPEAN PATENT SPECIFICATION**

(45) Date of publication and mention
of the grant of the patent:
**04.10.2017 Bulletin 2017/40**

(21) Application number: **10727377.3**

(22) Date of filing: **14.06.2010**

(51) Int Cl.:
*F25B 49/02* (2006.01)    *F25B 41/06* (2006.01)

(86) International application number:
**PCT/EP2010/058291**

(87) International publication number:
**WO 2010/146010 (23.12.2010 Gazette 2010/51)**

(54) **CONTROL APPARATUS AND METHOD OF CONTROLLING HEAT PUMP AND REFRIGERATION SYSTEMS**

STEUERGERÄT UND VERFAHREN ZUR STEUERUNG EINER WÄRMEPUMPE SOWIE KÜHLSYSTEME

APPAREIL DE COMMANDE ET PROCEDE DE COMMANDE DE SYSTEMES DE POMPE A CHALEUR ET DE REFRIGERATION

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **15.06.2009   DE 102009026942**

(43) Date of publication of application:
**25.04.2012   Bulletin 2012/17**

(73) Proprietor: **Honeywell Technologies Sarl**
**1110 Morges (CH)**

(72) Inventors:
• **ACKERMANN, Michael**
  **74722 Buchen-Hainstadt (DE)**
• **LEMMERZ, Hans-Peter**
  **74834 Elztal-Auerbach (DE)**
• **KÜPPER, Hans-Dieter**
  **74219 Möckmühl (DE)**

(74) Representative: **TBK**
**Bavariaring 4-6**
**80336 München (DE)**

(56) References cited:
**WO-A1-2008/080436    WO-A1-2009/039850**
**US-A- 6 012 299**

## Description

The present invention relates to a control method and a control apparatus for controlling heat pump and refrigeration systems. The invention especially relates to a method and an apparatus for controlling the overheat temperature of a refrigerant in an evaporator arranged in the heat pump or refrigerant circuit.

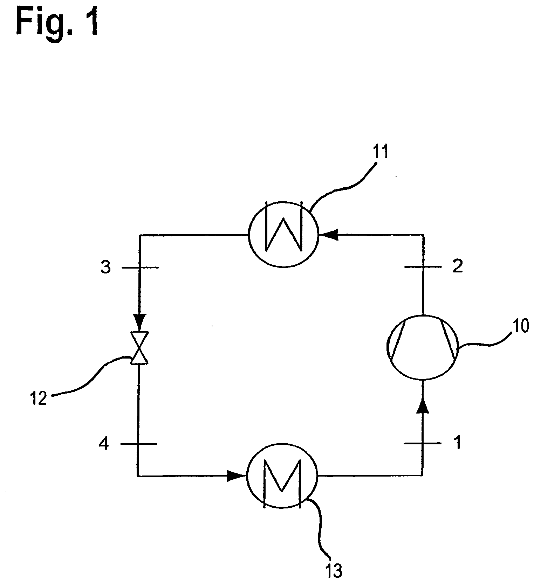

As exemplified in Fig. 1, in a heat pump or refrigeration system one or more evaporator(s), one or more compressor(s), one or more condenser(s) or liquefier(s) and one or more expansion valve(s) controllable by a control apparatus are arranged in series in a closed circuit.

In a control apparatus of this type known e.g. from the patent specification US-4523435 the expansion valve is controlled such that, as far as possible, no unevaporated refrigerant gets out of the evaporator via the suction passage into the compressor. For this purpose, there the actuating signal of the expansion valve is controlled in response to the magnitude and rate of change of the overheat temperature of the vapor in the evaporator, wherein the set value of the overheat temperature is fixed.

Another method and an apparatus of this type are described in the patent specification DE 37 13 869 C2. A set value of the overheat temperature of the refrigerant is automatically adapted to the respective operating conditions, such as cooling power, super-cooling, evaporation temperature etc., independently of the type of refrigerant. This adaptation is effectuated by the fact that the set value of the overheat temperature is varied in response to the rate of change of the overheat temperature when the overheat temperature exceeds or falls below preset limits.

The overheat temperature according to DE 37 13 869 C2 is established by appropriate sensors as difference of the temperature of the refrigerant at the output and at the input of the evaporator means.

From the patent specification DE 195 06 143 C2 another approach of controlling refrigeration and heat pump systems is known in which the vapor pressure is subjected to strong variations. In this case the variability of a number of scanned values of the temperature of the refrigerant at the output of the evaporator means is characterized in a function around a mean value of the scanned values. The variability or dispersion of this function serves as a measure for the stability of the temperature of the refrigerant at the output of the evaporator means. The higher the stability, the lower the set value of the overheat temperature can be selected. An increase in the set value is caused for the variability of the vapor temperature at the output of the evaporator means, when the evaporating temperature of the refrigerant is very unstable, i.e. when its variability is increased. At the same time, a higher variability of the vapor temperature is tolerated when the evaporating temperature varies more strongly. The magnitude of the function characterizing the variability of the evaporating temperature can be weighted by a factor. In this way, instability of the evaporating temperature is taken into account other than instability of the vapor temperature.

Furthermore, document WO 2009/039850 A1 discloses a controller and a method for controlling a cooling system by means of driving an expansion valve according to the preamble of claims 1 and 5 respectively. In the course of controlling the system, the controller firstly determines an overheating value of the system and carries out a comparison with a predetermined reference value. Thereafter, a maximum opening degree of the expansion valve is determined and the opening of the valve is controlled based on the result of the comparison.

Underlying the present invention is the object to provide an improved method and control apparatus for controlling a heat pump or refrigeration system causing an improved efficiency of the system.

This object is achieved by a control apparatus according to claim 1 and a method according to claim 5.

According to an aspect of the invention, a control apparatus for controlling the overheat temperature of the evaporator of a refrigeration or heat pump system is provided in which the evaporator, the compressor, the condenser and an expansion valve controllable by the control apparatus are arranged in series in a closed circuit, the control apparatus comprising a monitoring means for monitoring the energy balance of the evaporator, an evaluating means for determining whether the evaporator of the refrigeration or heat pump system operates in a stable or unstable range and a storage means in which set value characteristics of the overheat temperature are stored, wherein the control apparatus approaches, by incremental reduction of the set value of the set value characteristics of the overheat temperature corresponding to the current operating point, the respective value to the stability limit of the refrigeration or heat pump system. When the evaluating means determines that the evaporator of the refrigeration or heat pump system works in the unstable range, the control apparatus increases the set value of the overheat temperature until the evaluating means determines that the stable range has been reached again or the unstable range is left again. When the stable range has been reached again, the set value of the set value characteristics stored in the storage means for this operating point is overwritten by the current set value of the overheat temperature and is stored.

Further a faster regulation of the system upon restart of the system after switch-off is desirable. This can be effectuated by using the modified characteristics stored in the storage means.

The monitoring means preferably comprises sensors for detecting the pressure and the temperature at the output of the evaporator. A computing means can be provided to convert the detected pressure into the corresponding temperature.

Alternatively, the monitoring means comprises sensors for detecting the temperature at the input and at the output of the evaporator.

The evaluating means is set up for forming the gradient of the variation of the temperature detected in the monitoring means, for determining an unstable condition of the refrigeration or heat pump system, when the angle of the gradient $\alpha$ is smaller than a predetermined limit angle $\alpha_{1grenz}$, and for determining a stable condition of the refrigeration or heat pump system, when the angle of the gradient $\alpha$ becomes larger than a predetermined limit angle $\alpha_{2grenz}$ and for a predetermined time interval lies between $\alpha_{1grenz}$ and $\alpha_{2grenz}$.

It is advantageous that, when the evaluating means determines that the angle of the gradient $\alpha$ is smaller than the predetermined limit angle $\alpha_{1grenz}$, an unstable signal is set to "1" and a stable signal is set to "0", that, when the evaluating means determines that the angle of the gradient $\alpha$ is larger than the predetermined limit angle $\alpha_{2grenz}$, the unstable signal is set to "0" and that, when the evaluating means determines after setting the unstable signal to "0" that a predetermined time interval has expired while the angle of the gradient lies between $\alpha_{1grenz}$ and $\alpha_{2grenz}$, the stable signal is set to "1", wherein the set value of the set value characteristics stored in the storage means for said operating point is overwritten by the current set value of the overheat temperature and is stored, when the stable signal is set from "0" to "1".

Further, the air inlet temperature can be detected at the input of the evaporator. Based on the detected air inlet temperature, the set value characteristics can be adapted.

Moreover, the control apparatus can comprise an ice detection means which is set for detecting a shift of the set value characteristics due to frosting and icing of the evaporator surface and for determining the beginning of icing of the evaporator surface, wherein, when the ice detection means determines icing, a defrosting operation can be initiated as needed.

In accordance with a further aspect of the invention, a method of controlling the overheat temperature of the evaporator of a refrigeration or heat pump system is provided in which the evaporator, the compressor, the condenser and the expansion valve controllable by the control apparatus are arranged in series in a closed circuit, comprising the steps of monitoring the energy balance of the evaporator, of determining whether the heat pump system operates in a stable or unstable range and of incrementally reducing the set value of the overheat temperature of set value characteristics corresponding to the current operating point which is stored in a storage means to approach the respective value to the stability limit of the refrigeration or heat pump system. When it is determined that the refrigeration or heat pump system operates within the unstable range, the set value of the overheat temperature is incrementally increased until it is determined that the stable range has been reached again. When the stable range has been reached again, the set value of the set value characteristics stored for said operating point in the storage means is overwritten by the current set value of the overheat temperature and is stored.

Preferably in the method of monitoring the energy balance of the evaporator the temperature and the pressure are detected at the output of the evaporator.

Alternatively, the temperature can be detected at the input and at the output of the evaporator.

In the step of determining whether the refrigerating or heat pump system works in a stable or unstable range the gradient of the variation of the detected temperature is formed, an unstable condition of the heat pump system is determined, when the angle of the gradient $\alpha$ is smaller than a predetermined limit angle $\alpha_{1grenz}$, and a stable condition of the refrigeration or heat pump system is determined, when the angle of the gradient $\alpha$ exceeds a predetermined limit angle $\alpha_{2grenz}$ and for a predetermined time interval lies between $\alpha_{1grenz}$ and $\alpha_{2grenz}$.

It is preferably applicable to the method that, when it is determined that the angle of the gradient $\alpha$ is smaller than the predetermined limit angle $\alpha_{1grenz}$, an unstable signal is set to "1" and a stable signal is set to "0", that, when it is determined that the angle of the gradient $\alpha$ is larger than the predetermined limit angle $\alpha_{2grenz}$, the unstable signal is set to "0", and that, when after setting the unstable signal to "0" it is determined that a predetermined time interval has lapsed during which the angle of the gradient lies between $\alpha_{1grenz}$ and $\alpha_{2grenz}$, the stable signal is set to "1", wherein the set value of the set value characteristics stored in the storage means for this operating point is overwritten by the current set value of the overheat temperature and is stored, when the stable signal is set from "0" to "1".

Further, the air inlet temperature can be detected at the input of the evaporator and the set value characteristics can be adapted on the basis of the detected air inlet temperature.

Moreover, a point in time of the beginning of icing of the evaporator surface can be determined on the basis of evaluating a shift of the set value characteristics which occurs by virtue of varying heat transfer behavior of the evaporator by frosting and icing of the evaporator surface.

Further modifications and advantageous developments are shown in the dependent claims.

The present invention shall be described hereinafter by way of preferred embodiments with reference to the enclosed drawings.

In the drawings:

Figure 1 shows the schematic structure of a refrigeration system or a heat pump;

Figure 2 shows a graph indicative of the stability limit (minimum stable signal) of the evaporator output range through overheating;

Figure 3 shows the schematic structure of the control path according to an embodiment of the invention;

Figure 4 shows a flow chart for detecting the characteristics of the minimum-stable signal (MSS characteristic curve) according to an embodiment of the present invention; and

Figure 5 shows a flow chart of a control operation according to an embodiment of the present invention.

Fig. 1 shows the basic scheme of a refrigeration system or a heat pump. In the simplest case, the circulation process of the heat pump or refrigeration system consists of the four changes of state of a refrigerant, i.e. compressing 1, liquefying 2, throttling 3 and evaporating 4. They are performed in the four basic components of compressor 10, condenser 11, expansion valve 12 and evaporator 13.

The compressor 10 can also consist of a multi-compressor refrigeration system including plural compressors.

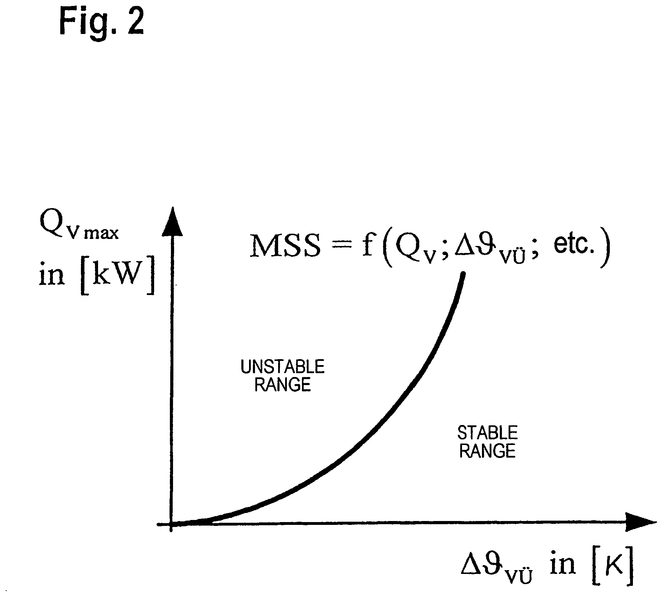

In Fig. 2 a graph is shown which represents the MSS characteristic curve, as it is called (MSS = minimum-stable signal). It indicates the maximum possible refrigerating capacity in response to overheating.

The X-axis represents the overheating of the refrigerant $\Delta_{v\ddot{u}}$ in Kelvin (K), the Y-axis indicates the maximum possible refrigerating capacity $Qv_{max}$ in kW. The MSS characteristic denotes the limit between the stable operating range in which no droplets are contained in the evaporated refrigerant and the unstable range in which droplets are contained in the evaporated refrigerant.

The MSS characteristic is a function which depends, inter alia, on the refrigerating capacity of the evaporator, on the overheat temperature and further parameters which are given, for instance, by the type of system or the ambient conditions.

The MSS effect results from the physical effect of spray-boiling. Here an overlapping of overheating and evaporation takes place. This means that the evaporator discharges its heat to the gas particles. The volume flow still contains droplets, however, which evaporate more slowly due to the smaller temperature difference. In this range, commercial sensors are adapted to measure only the lower evaporating temperature of the entrained droplets and not the temperature of the already overheated gas. Upon reaching said range, this results in an erratic drop of the measured evaporator discharge temperature. The overheat temperature formed of the difference of the two temperatures becomes zero. Since the controller controls in accordance with the overheat temperature, this results in unstable control behavior. Therefore the term "minimum-stable signal" is formed. Since this characteristic curve is strongly dependent, for instance, on the design of the respective evaporator, it has to be mapped individually for each type of evaporator.

The amount of overheating, i.e. the overheat temperature is usually controlled by actuating the expansion valve. The expansion valve is opened or closed such that the refrigerant is overheated in the evaporator so far that preferably no liquid refrigerant enters into the compressor in order to avoid, for instance, damage of the compressor.

Compared to this, however, it is desirable to approach the MSS characteristic curve at best so as to optimize the efficiency of the refrigeration or heat pump system.

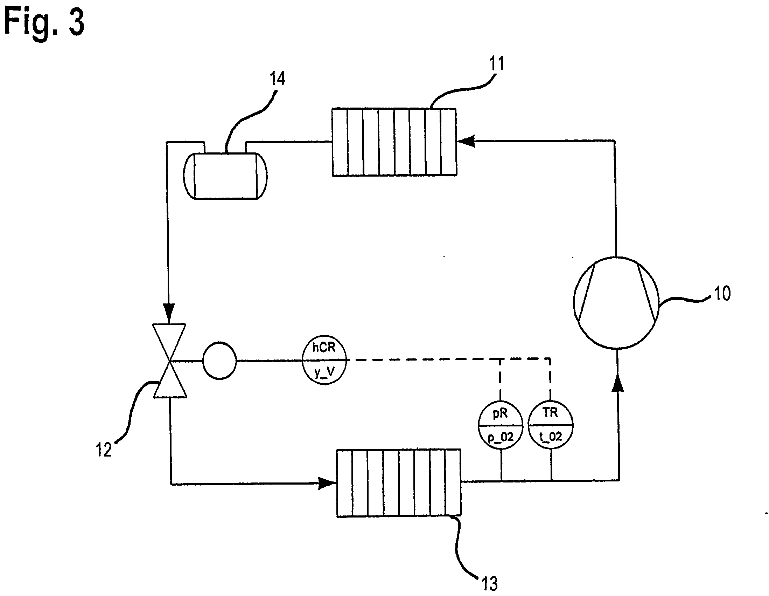

Fig. 3 shows a schematic structure of a control path according to an embodiment of the invention.

The refrigerant passes in a closed circuit through the compressor 10, the condenser 11, wherein the condensed refrigerant can be collected in a collector 14, via the expansion valve 12 into the evaporator 13 from where the gaseous refrigerant is again supplied to the compressor 10.

As described in the foregoing, the overheating of the refrigerant passing through the evaporator 13 is controlled by the expansion valve 12. In the present embodiment two measuring points pR, TR are provided at which a thermodynamic state detection is performed. At the output of the evaporator the temperature t_02 and the pressure p_02 of the refrigerant are measured by appropriate sensors. The overheat temperature $\Delta\delta_{v\ddot{u}}$ serving as control variable is established as

$$\Delta\delta_{v\ddot{u}} = t\_02 - t(p\_02).$$

The variable hCR of the controller is the valve lift y_V of the expansion valve.

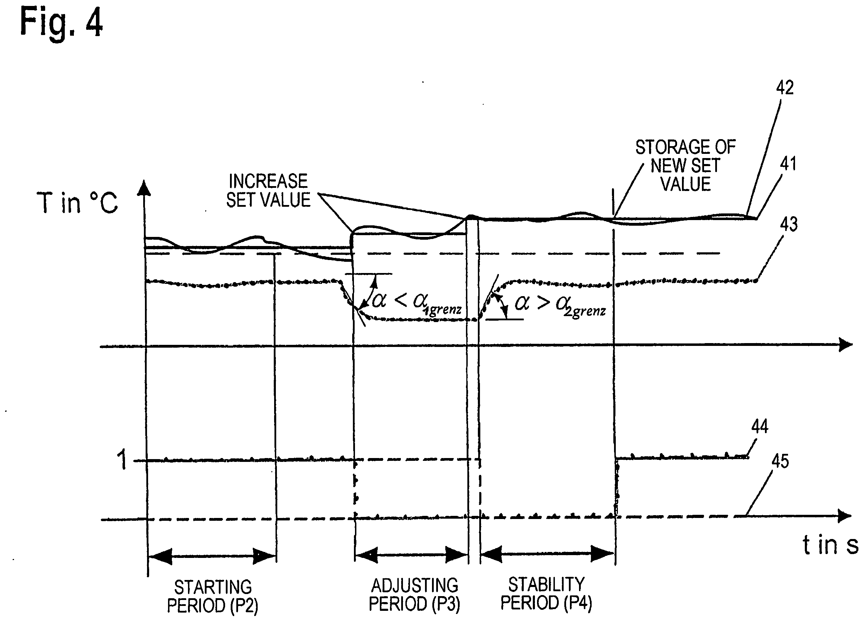

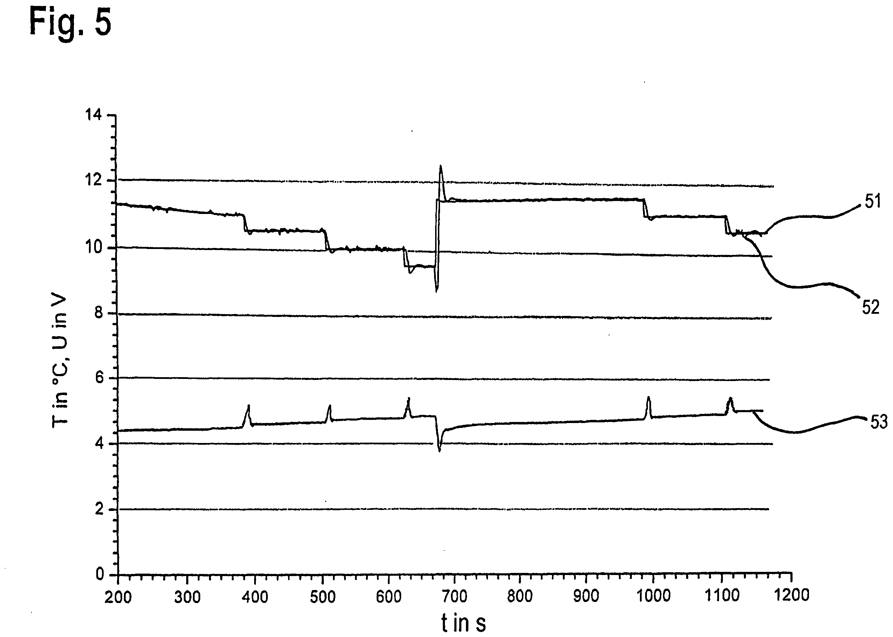

Hereinafter the method of controlling the refrigeration or heat pump system according to the present embodiment is described by way of the graphs of Figures 4 and 5.

In the upper half of the diagram, Fig. 4 illustrates temperature variations over time. The graph 41 indicates the set value of the overheating, the graph 42 indicates the actual value of the overheating and the dotted graph 43 indicates the temperature measured at the output of the evaporator.

In the lower half of the diagram, signal variations for the signals "stable" 44 (dot-dash line) and "unstable" 45 (dashed line) are shown.

Fig. 5 shows the course of a control of the refrigeration or heat pump system according to the invention over time, wherein the graph 51 is indicative of the set value of the overheating and the graph 52 is indicative of the actual value of the overheating. The graph 53 shows the course of the valve tension at the expansion valve.

The actual MSS characteristic curve of a refrigeration or heat pump system is variable in time and dependent on a plurality of variables which are partly not detectable or are difficult to detect. Therefore, at first for each refrigeration or heat pump system an output MSS characteristic curve is established, for instance by tests or simulation, and stored in a storage means of the control apparatus. The latter is intended to approach the actual MSS characteristic curve as far as possible. For this purpose, the design of the components used and ambient parameters of the system are taken into account, for instance.

After that, set value characteristics of overheating are selected according to the output MSS characteristic curve such that the refrigeration or heat pump system with high probability operates in each load range within the stable operating range so that damage of the compressor 10 is excluded.

It is reasonable that higher overheating is adjusted than it would be theoretically possible, which results in a lower efficiency of the system.

The set value characteristics are always adjusted such that they approach the stored MSS characteristic curve in the storage means as far as possible.

In order to improve the efficiency of the system, however, the control apparatus according to the invention performs an incremental approach of the set value toward the actual MSS characteristic curve, starting with the respective value of the operating point on the stored characteristics.

When starting the system, the overheating is set by way of the output MSS characteristic curve or the corresponding set value characteristics for the respective load range (operating point) by appropriately actuating the expansion valve. After a predetermined time interval that may range from some seconds to several minutes, the set value of overheating is reduced by a predetermined amount, for instance 0.1 - 1 Kelvin. After a further lapse of a period of time which is selected to be long enough to ensure leveling of the actual value of overheating, this procedure is repeated, i.e. the set value is in turn incrementally reduced.

Such course is shown, for instance, in the diagram in Fig. 5, wherein the incremental adaptations of the set value are performed as example of the points in time 380s and 510s by appropriate setting of the expansion valve drive.

Simultaneously, the control apparatus according to the present embodiment permanently monitors the energy balance of the evaporator 13, for instance via the sensors at the output of the evaporator 13 that measure the pressure and the temperature of the refrigerant at particular intervals, e.g. several ms, and supply corresponding signals to the control apparatus.

As soon as the system gets within the unstable operating range and refrigerant in the form of drops is contained at the output of the evaporator 13, the temperature measured at the output of the evaporator abruptly drops.

Therefore, in the control apparatus an evaluating means is provided for permanently monitoring the variation of the overheat temperature. As also illustrated in Fig. 4, the gradient of the temperature variation is formed and evaluated, where it applies that, when the angle of the gradient $\alpha$ is smaller than a predetermined limit angle $\alpha_{1grenz}$, it is determined in the evaluating means that no tolerable variation of the actual value of the temperature, e.g. in the starting period (P2), but such a temperature drop is provided that a transition to the unstable operating range is provided.

As soon as the evaluating means determines such transition, the "stable" signal is set to "0" and the "unstable" signal is set to "1".

When the "unstable" signal is set to "1", the control apparatus immediately increases the set value of the overheat temperature by a predetermined amount. While a particular adjusting period (P3) is awaited during which the actual value can level off with the set value, it is evaluated in the evaluating means whether the angle of the gradient $\alpha$ is larger than a predetermined limit angle $\alpha_{2grenz}$. If so, the "unstable" signal is set to "0", and if within a particular stability period (P4) the measured temperature value of the refrigerant remains within a particular tolerance range at the output of the evaporator, the "stable" signal is set to "1".

Simultaneously, the set value at the time of changing the "stable" signal to "1" is stored as the present set value in the storage means i.e. the respective value of the stored MSS characteristic curve is replaced by the new value.

If, however, the angle of the gradient $\alpha$ does not exceed the predetermined limit angle $\alpha_{2grenz}$ during the adjusting period (P3), the control apparatus again increases the set value of overheating by a particular amount. This is performed until the "unstable" signal is set to "0".

The time intervals and amounts of change of the temperature can also be variably adjusted. For instance, the amount of change of the incremental approach can be higher upon activation of the system and is selected to be lower with later iterations.

The incremental approach can also be suspended upon reaching a predetermined difference between overheating and the real MSS characteristic curve.

Since values of the real MSS characteristic curve are permanently approached, and the stored set value characteristics are overwritten by the new set values established by way of the afore-described method, it is possible to operate the refrigeration or heat pump system at high efficiency, wherein the risk of damage of the compressor 10 by penetrating liquid refrigerant can be minimized.

Since these values are stored in the storage means and the latter can be in the form of a non-volatile storage means, the refrigeration or heat pump system can also perform the control of the expansion valve by way of the currently stored set value characteristics even upon a restart after switch-off so that after repeatedly starting the system immediately high efficiency can be attained.

Further, the air inlet temperature of the evaporator can be measured. The measured air inlet temperature can be used as correcting variable for shifting the controller characteristics (set value characteristics) in accordance with the (learnt) characteristic of the evaporator.

In this way, too frequent repeated adaptation of the control to the varied characteristic of the evaporator due to a varied source temperature can be avoided.

An appropriate shift of the controller characteristics is resulting from the varying heat transfer behavior of the evaporator due to frosting and icing of the evaporator surface. Based on the evaluation of this shift, the time of the beginning of icing at the evaporator can be determined. With the aid of this detection, a defrosting operation can be initiated as needed in a manner optimized in terms of time and energy.

A control apparatus performs incremental approach of the set value of overheating of the evaporator of a refrigeration or heat pump system toward the MSS characteristic curve starting with characteristics stored in a storage means, the energy balance of the evaporator being permanently monitored. Instability is identified by evaluating the gradient of the temperature variation at the output of the evaporator. As a reaction to instability the respective set value is incrementally increased. As soon as the actual value for a predetermined time interval is within a tolerance, the system is detected as being stable again, wherein the new set value is stored in the characteristics.

**Claims**

1. A control apparatus for controlling the overheat temperature of an evaporator of a refrigeration or heat pump system in which the evaporator **(13)**, a compressor **(10)**, a condenser **(11)** and an expansion valve **(12)** controllable by the control apparatus are arranged in series in a closed circuit, comprising:

   a monitoring means for monitoring the energy balance of the evaporator **(13)**, the monitoring means including sensors for detecting the pressure and the temperature at the output of the evaporator **(13)** or sensors for detecting the temperature at the input and at the output of the evaporator **(13)**,
   an evaluating means for determining whether the refrigeration or heat pump system operates within a stable or unstable range of the evaporator **(13)** based on the variables detected by the monitoring means, and
   a storage means in which the set value characteristics of the overheat temperature are stored, wherein the control apparatus approaches the respective value, by incremental reduction of the set value of the set value characteristics of the overheat temperature corresponding to the current operating point, to the stability limit of the refrigeration or heat pump system,
when the evaluating means determines that the refrigeration or heat pump system operates within the unstable range of the evaporator **(13)**, the control apparatus incrementally increases the set value of the overheat temperature until the evaluating means determines that the stable range of the evaporator has been reached again, and
when the stable range of the evaporator has been reached again, the set value of the set value characteristics stored in the storage means for said operating point is overwritten by the current set value of the overheat temperature and is stored;
**characterized in that** the evaluating means is set
to form the gradient of the variation of the temperature detected in the monitoring means at the output of the evaporator **(13)**,
to determine an unstable condition of the evaporator **(13)** of the refrigeration or heat pump system, when the gradient falls below a predetermined threshold $\alpha_{1grenz}$, and
to determine a stable condition of the evaporator of the refrigeration or heat pump system, when the gradient exceeds a predetermined threshold $\alpha_{2grenz}$ and for a predetermined interval lies between $\alpha_{1grenz}$ and $\alpha_{2grenz}$.

2. A control apparatus according to claim 1, wherein,

   when the evaluating means determines that the gradient has dropped below the predetermined threshold $\alpha_{1grenz}$, an unstable signal is set to "1" and a stable signal is set to "0",
   when the evaluating means determines that the gradient exceeds the predetermined threshold $\alpha_{2grenz}$, the unstable signal is set to "0", and
   when the evaluating means determines after setting the unstable signal to "0" that a predetermined time interval has lapsed while the gradient lies between $\alpha_{1grenz}$ and $\alpha_{2grenz}$, the stable signal is set to "1",
   wherein the set value of the set value characteristics stored for said operating point in the storage means is overwritten by the current set value of the overheat temperature and is stored, when the stable signal is set from "0" to "1".

3. A control apparatus according to any one of the preceding claims, wherein the control apparatus is provided to detect the air inlet temperature at the input of the evaporator **(13)** and to adapt the set value characteristics based on the detected air inlet temperature.

4. A control apparatus according to any one of the preceding claims, further comprising an ice detection means for determining a point in time of the beginning of icing of the evaporator **(13)** surface based on evaluating a shift of the set value characteristics which occurs due to varying heat transfer behavior of the evaporator by frosting and icing of the evaporator **(13)** surface.

5. A method of controlling the overheat temperature of an evaporator **(13)** of a refrigeration or heat pump system in which the evaporator **(13),** a compressor **(10),** a condenser **(11)** and an expansion valve **(12)** controllable by the method are arranged in series in a closed circuit, comprising the steps of:

monitoring the energy balance of the evaporator **(13),** wherein for monitoring the energy balance of the evaporator **(13)** the temperature and the pressure are detected at the output of the evaporator or the temperature is detected at the input and at the output of the evaporator **(13),** determining whether the evaporator **(13)** of the refrigeration or heat pump system operates within a stable or unstable range, based on the variables detected in the monitoring step, incrementally reducing the set value of the overheat temperature of set value characteristics corresponding to the current operating point which is stored in storage means to approach the respective value to the stability limit of the refrigeration or heat pump system, when it is determined that the evaporator **(13)** of the refrigeration or heat pump system operates within the unstable range, the set value of the overheat temperature is incrementally increased until it is determined that the stable range of the evaporator **(13)** has been reached again, and, when the stable range of the evaporator **(13)** has been reached again, the set value of the set value characteristics stored in the storage means for said operating point is overwritten by the current set value of the overheat temperature and is stored; **characterized in that** in the step of determining whether the evaporator **(13)** of the refrigeration or heat pump system operates within a stable or unstable range the gradient of the variation of the detected temperature is formed, an unstable condition of the evaporator **(13)** of the refrigeration or heat pump system is determined, when the gradient falls below a predetermined threshold $\alpha_{1grenz}$, and a stable condition of the evaporator of the refrigeration or heat pump system is determined, when the gradient exceeds

a predetermined threshold $\alpha_{2grenz}$ and for a predetermined time interval lies between $\alpha_{1grenz}$ and $\alpha_{2grenz}$.

6. A method according to claim 5, wherein,

when it is determined that the gradient falls below the predetermined threshold $\alpha_{1grenz}$, an unstable signal is set to "1" and a stable signal is set to "0", when it is determined that the gradient exceeds the predetermined threshold $\alpha_{2grenz}$, the unstable signal is set to "0", and, when it is determined after setting the unstable signal to "0" that a predetermined time interval has lapsed while the gradient lies between $\alpha_{1grenz}$ and $\alpha_{2grenz}$, the stable signal is set to "1", wherein the set value of the set value characteristics stored for said operating point in the storage means is overwritten by the current set value of the overheat temperature and is stored, when the stable signal is set from "0" to "1".

7. A method according to claim 5 or 6, wherein the air inlet temperature is detected at the input of the evaporator **(13)** and the set value characteristics are adapted based on the detected air inlet temperature.

8. A method according to any one of the claims 5 to 7, wherein a point in time of the beginning of icing of the evaporator **(13)** surface is determined based on evaluating a shift of the set value characteristics which occurs due to varying heat transfer behavior of the evaporator by frosting and icing of the evaporator **(13)** surface.

**Patentansprüche**

1. Steuerungsvorrichtung zum Steuern der Überhitzungstemperatur eines Verdampfers eines Kälte- oder Wärmepumpensystems, bei dem der Verdampfer **(13),** ein Verdichter **(10),** ein Kondensator **(11)** und ein durch die Steuerungsvorrichtung steuerbares Expansionsventil **(12)** in einem geschlossenen Kreis hintereinander angeordnet sind, mit:

einer Überwachungseinrichtung zum Überwachen der Energiebilanz des Verdampfers **(13),** wobei die Überwachungseinrichtung Sensoren zum Erfassen des Drucks und der Temperatur am Ausgang des Verdampfers **(13)** oder Sensoren zum Erfassen der Temperatur am Eingang und am Ausgang des Verdampfers **(13)** umfasst, einer Auswerteeinrichtung zum Bestimmen, ob das Kälte- oder Wärmepumpensystem in einem stabilen oder instabilen Bereich des Verdampfers **(13)** arbeitet, basierend auf den durch die Überwachungseinrichtung erfassten Variablen, und

einer Speichereinrichtung, in der Sollwert-Eigenschaften der Überhitzungstemperatur gespeichert sind,

wobei die Steuerungsvorrichtung durch inkrementales Vermindern des dem gegenwärtigen Arbeitspunkt entsprechenden Sollwerts der Sollwert-Eigenschaften der Überhitzungstemperatur den jeweiligen Wert der Stabilitätsgrenze des Kälte- oder Wärmepumpensystems annähert,

wobei, wenn die Auswerteeinrichtung bestimmt, dass das Kälte- oder Wärmepumpensystem im instabilen Bereich des Verdampfers **(13)** arbeitet, die Steuerungsvorrichtung den Sollwert der Überhitzungstemperatur inkremental erhöht, bis die Auswerteeinrichtung bestimmt, dass der stabile Bereich des Verdampfers wieder erreicht ist, und

wenn der stabile Bereich des Verdampfers wieder erreicht ist, der in der Speichereinrichtung für diesen Arbeitspunkt gespeicherte Sollwert der Sollwert-Eigenschaften mit dem gegenwärtigen Sollwert der Überhitzungstemperatur überschrieben und abgespeichert wird;
**dadurch gekennzeichnet, dass**
die Auswerteeinrichtung eingerichtet ist,
um den Gradienten des Verlaufs der in der Überwachungseinrichtung erfassten Temperatur am Ausgang des Verdampfers **(13)** zu bilden,
um einen instabilen Zustand des Verdampfers **(13)** des Kälte- oder Wärmepumpensystems zu bestimmen, wenn der Gradient unter einen vorbestimmten Schwellenwert $\alpha_{1grenz}$ abfällt, und
um einen stabilen Zustand des Verdampfers des Kälte- oder Wärmepumpensystems zu bestimmen, wenn der Gradient über einen vorbestimmten Schwellenwert $\alpha_{2grenz}$ ansteigt und für eine vorbestimmte Zeitspanne zwischen $\alpha_{1grenz}$ und $\alpha_{2grenz}$ liegt.

2. Steuerungsvorrichtung gemäß Anspruch 1, wobei,

wenn die Auswerteeinrichtung bestimmt, dass der Gradient unter den vorbestimmten Schwellenwert $\alpha_{1grenz}$ abgefallen ist, ein Instabil-Signal auf "1" und ein Stabil-Signal auf "0" gesetzt wird,
wenn die Auswerteeinrichtung bestimmt, dass der Gradient über den vorbestimmten Schwellenwert $\alpha_{2grenz}$ ansteigt, das Instabil-Signal auf "0" gesetzt wird, und
wenn die Auswerteeinrichtung nach Setzten des Instabil-Signals auf "0" bestimmt, dass eine vorbestimmte Zeitspanne abgelaufen ist, während der Gradient zwischen $\alpha_{1grenz}$ und $\alpha_{2grenz}$ liegt, das Stabil-Signal auf "1" gesetzt wird,

wobei der in der Speichereinrichtung für diesen Arbeitspunkt gespeicherte Sollwert der Sollwert-Eigenschaften mit dem gegenwärtigen Sollwert der Überhitzungstemperatur überschrieben und abgespeichert wird, wenn das Stabil-Signal von "0" auf "1" gesetzt wird.

3. Steuerungsvorrichtung gemäß einem der vorhergehenden Ansprüche, wobei die Steuerungsvorrichtung eingerichtet ist, die Lufteintrittstemperatur am Eingang des Verdampfers **(13)** zu erfassen und basierend auf der erfassten Lufteintrittstemperatur die Sollwert-Eigenschaften anzupassen.

4. Steuerungsvorrichtung gemäß einem der vorhergehenden Ansprüche, weiterhin mit einer Vereisungserkennungseinrichtung zum Bestimmen eines Zeitpunkts eines Beginns einer Vereisung der Oberfläche des Verdampfers **(13)** basierend auf einer Auswertung einer Verschiebung der Sollwert-Eigenschaften, die aufgrund eines sich ändernden Wärmeübertragungsverhaltens des Verdampfers durch Bereifung und Vereisung der Oberfläche des Verdampfers **(13)** auftritt.

5. Verfahren zum Steuern der Überhitzungstemperatur eines Verdampfers **(13)** eines Kälte- oder Wärmepumpensystems, bei dem der Verdampfer **(13)**, ein Verdichter **(10)**, ein Kondensator **(11)** und ein durch das Verfahren steuerbares Expansionsventil **(12)** in einem geschlossenen Kreis hintereinander angeordnet sind, mit den Schritten:

Überwachen der Energiebilanz des Verdampfers **(13)**, wobei zum Überwachen der Energiebilanz des Verdampfers **(13)** die Temperatur und der Druck am Ausgang des Verdampfers oder die Temperatur am Eingang und am Ausgang des Verdampfers **(13)** erfasst werden,
Bestimmen, ob der Verdampfer **(13)** des Kälte- oder Wärmepumpensystems in einem stabilen oder instabilen Bereich arbeitet, basierend auf den in dem Überwachungsschritt erfassten Größen,
inkrementales Vermindern des dem gegenwärtigen Arbeitspunkt entsprechenden Sollwerts der Überhitzungstemperatur von Sollwert-Eigenschaften, die in einer Speichereinrichtung gespeichert sind, um den jeweiligen Wert der Stabilitätsgrenze des Kälte- oder Wärmepumpensystems anzunähern,
wobei, wenn bestimmt wird, dass der Verdampfer **(13)** des Kälte- oder Wärmepumpensystems im instabilen Bereich arbeitet, der Sollwert der Überhitzungstemperatur inkremental erhöht wird, bis bestimmt wird, dass der stabile Bereich des Verdampfers **(13)** wieder erreicht ist, und wenn der stabile Bereich des Verdampfers **(13)** wieder erreicht ist, der in der Speichereinrichtung für diesen Arbeitspunkt gespeicherte Sollwert der Sollwert-Eigenschaften mit dem gegenwärtigen Sollwert der Überhitzungstemperatur überschrieben und abgespeichert wird, **dadurch gekennzeichnet, dass**
in dem Schritt des Bestimmens, ob der Verdampfer **(13)** des Kälte- oder Wärmepumpensystems in einem stabilen oder instabilen Bereich arbeitet, der Gradient des Verlaufs der erfassten Temperatur gebildet wird, ein instabiler Zustand des Verdampfers **(13)** des Kälte- oder Wärmepumpensystems bestimmt wird, wenn der Gradient unter einen vorbestimmten Schwellenwert $\alpha_{1grenz}$ abfällt, und ein stabiler Zustand des Verdampfers des Kälte- oder Wärmepumpensystems bestimmt wird, wenn der Gradient über einen vorbestimmten Schwellenwert $\alpha_{2grenz}$ ansteigt und für eine vorbestimmte Zeitspanne zwischen $\alpha_{1grenz}$ und $\alpha_{2grenz}$ liegt.

6. Verfahren gemäß Anspruch 5, wobei,

wenn bestimmt wird, dass der Gradient unter dem vorbestimmten Schwellenwert $\alpha_{1grenz}$ fällt, ein Instabil-Signal auf "1" und ein Stabil-Signal auf "0" gesetzt wird,
wenn bestimmt wird, dass der Gradient über den vorbestimmten Schwellenwert $\alpha_{2grenz}$ steigt, das Instabil-Signal auf "0" gesetzt wird, und
wenn nach Setzten des Instabil-Signals auf "0" bestimmt wird, dass eine vorbestimmte Zeitspanne abgelaufen ist, während der der Gradient zwischen $\alpha_{1grenz}$ und $\alpha_{2grenz}$ liegt, das Stabil-Signal auf "1" gesetzt wird,
wobei der in der Speichereinrichtung für diesen Arbeitspunkt gespeicherte Sollwert der Sollwert-Eigenschaften mit dem gegenwärtigen Sollwert der Überhitzungstemperatur überschrieben und abgespeichert wird, wenn das Stabil-Signal von "0" auf "1" gesetzt wird.

7. Verfahren gemäß Anspruch 5 oder 6, wobei die Lufteintrittstemperatur am Eingang des Verdampfers **(13)** erfasst wird, und basierend auf der erfassten Lufteintrittstemperatur die Sollwert-Eigenschaften angepasst werden.

8. Verfahren gemäß einem der Ansprüche 5 bis 7, wobei ein Zeitpunkt eines Beginns einer Vereisung der Oberfläche des Verdampfers **(13)** basierend auf einer Auswertung einer Verschiebung der Sollwert-Eigenschaften bestimmt wird, die aufgrund eines sich ändernden Wärmeübertragungsverhaltens des Verdampfers durch Bereifung und Vereisung der Oberfläche des Verdampfers **(13)** auftritt.

**Revendications**

1. Appareil de commande pour commander la température de surchauffe d'un évaporateur d'un système de réfrigération ou de pompe à chaleur dans lequel l'évaporateur (13), un compresseur (10), un condenseur (11) et un détendeur (12) commandables par l'appareil de commande sont disposés en série en un circuit fermé, comportant :

un moyen de surveillance servant à surveiller le bilan d'énergie de l'évaporateur (13), le moyen de surveillance comprenant des capteurs servant à détecter la pression et la température à la sortie de l'évaporateur (13) ou des capteurs servant à détecter la température à l'entrée et à la sortie de l'évaporateur (13),
un moyen d'évaluation servant à déterminer si le système de réfrigération ou de pompe à chaleur fonctionne à l'intérieur d'une plage stable ou instable de l'évaporateur (13) d'après les variables détectées par le moyen de surveillance, et
un moyen de stockage dans lequel sont stockées les caractéristiques de consigne de la température de surchauffe,
l'appareil de commande rapprochant la valeur respective, par réduction incrémentale de la consigne des caractéristiques de consigne de la température de surchauffe correspondant au point de fonctionnement actuel, de la limite de stabilité du système de réfrigération ou de pompe à chaleur,
lorsque le moyen d'évaluation détermine que le système de réfrigération ou de pompe à chaleur fonctionne à l'intérieur de la plage instable de l'évaporateur (13),
l'appareil de commande augmentant incrémentalement la consigne de la température de surchauffe jusqu'à ce que le moyen d'évaluation détermine que la plage stable de l'évaporateur a de nouveau été atteinte, et
lorsque la plage stable de l'évaporateur a de nouveau été atteinte, la consigne des caractéristiques de consigne stockées dans le moyen de stockage pour ledit point de fonctionnement étant écrasée par la consigne actuelle de la température de surchauffe et étant stockée ;
**caractérisé en ce que** le moyen d'évaluation est réglé pour former la pente de la variation de la température détectée dans le moyen de surveillance à la sortie de l'évaporateur (13),
pour déterminer un état instable de l'évaporateur (13) du système de réfrigération ou de pompe à chaleur, lorsque la pente tombe au-dessous d'un seuil prédéterminé $\alpha_{1grenz}$, et
pour déterminer un état stable de l'évaporateur du système de réfrigération ou de pompe à chaleur, lorsque la pente dépasse un seuil prédéterminé $\alpha_{2grenz}$ et, pendant un intervalle prédéterminé, se situe entre $\alpha_{1grenz}$ et $\alpha_{2grenz}$.

2. Appareil de commande selon la revendication 1, lorsque le moyen d'évaluation détermine que la pente est tombée au-dessous du seuil prédéterminé $\alpha_{1grenz}$, un signal instable étant positionné à "1" et un signal stable étant positionné à "0",

lorsque le moyen d'évaluation détermine que la pente dépasse le seuil prédéterminé $\alpha_{2grenz}$, le signal instable étant positionné à "0", et

lorsque le moyen d'évaluation détermine, après avoir positionné le signal instable à "0", qu'un intervalle de temps prédéterminé s'est écoulé pendant lequel la pente se situe entre $\alpha_{1grenz}$ et $\alpha_{2grenz}$, le signal stable étant positionné à "1",

la consigne des caractéristiques de consigne stockées pour ledit point de fonctionnement dans le moyen de stockage étant écrasée par la consigne actuelle de la température de surchauffe et étant stockée, lorsque le signal stable est positionné de "0" à "1".

3. Appareil de commande selon l'une quelconque des revendications précédentes, l'appareil de commande étant prévu pour détecter la température d'entrée d'air à l'entrée de l'évaporateur (13) et pour adapter les caractéristiques de consigne d'après la température d'entrée d'air détectée.

4. Appareil de commande selon l'une quelconque des revendications précédentes, comportant en outre un moyen de détection de glace servant à déterminer un instant du début de givrage de la surface de l'évaporateur (13) d'après une évaluation d'un décalage des caractéristiques de consigne qui survient en raison d'un comportement variable de transfert de chaleur de l'évaporateur en raison du gel et du givrage de la surface de l'évaporateur (13).

5. Procédé de commande de la température de surchauffe d'un évaporateur (13) d'un système de réfrigération ou de pompe à chaleur dans lequel l'évaporateur (13), un compresseur (10), un condenseur (11) et un détendeur (12) commandables par le procédé sont disposés en série en un circuit fermé, comportant les étapes consistant à :

surveiller le bilan d'énergie de l'évaporateur (13), la température et la pression étant détectées à la sortie de l'évaporateur ou la température est détectée à l'entrée et à la sortie de l'évaporateur (13) afin de surveiller le bilan d'énergie de l'évaporateur (13),
déterminer si l'évaporateur (13) du système de réfrigération ou de pompe à chaleur fonctionne à l'intérieur d'une plage stable ou instable, d'après les variables détectées à l'étape de surveillance,

réduire incrémentalement la consigne de la température de surchauffe de caractéristiques de consigne correspondant au point de fonctionnement actuel qui est stocké dans le moyen de stockage pour approcher la valeur respective de la limite de stabilité du système de réfrigération ou de pompe à chaleur,

lorsqu'il est déterminé que l'évaporateur (13) du système de réfrigération ou de pompe à chaleur fonctionne à l'intérieur de la plage instable, la consigne de la température de surchauffe étant augmentée incrémentalement jusqu'à ce qu'il soit déterminé que la plage stable de l'évaporateur (13) a de nouveau été atteinte, et,

lorsque la plage stable de l'évaporateur (13) a de nouveau été atteinte, la consigne des caractéristiques de consigne stockées dans le moyen de stockage pour ledit point de fonctionnement étant écrasée par la consigne actuelle de la température de surchauffe et étant stockée ;

**caractérisé en ce que** dans l'étape consistant à déterminer si l'évaporateur (13) du système de réfrigération ou de pompe à chaleur fonctionne à l'intérieur d'une plage stable ou instable, la pente de la variation de la température détectée est formée, un état instable de l'évaporateur (13) du système de réfrigération ou de pompe à chaleur est déterminé lorsque la pente tombe au-dessous d'un seuil prédéterminé $\alpha_{1grenz}$ et un état stable de l'évaporateur du système de réfrigération ou de pompe à chaleur est déterminé lorsque la pente dépasse un seuil prédéterminé $\alpha_{2grenz}$ et, pendant un intervalle de temps prédéterminé, se situe entre $\alpha_{1grenz}$ et $\alpha_{2grenz}$.

6. Procédé selon la revendication 5, lorsqu'il est déterminé que la pente tombe au-dessous du seuil prédéterminé $\alpha_{1grenz}$, un signal instable étant positionné à "1" et un signal stable étant positionné à "0"

lorsqu'il est déterminé que la pente dépasse le seuil prédéterminé $\alpha_{2grenz}$, le signal instable étant positionné à "0" et,

lorsqu'il est déterminé, après avoir positionné le signal instable à "0", qu'un intervalle de temps prédéterminé s'est écoulé pendant lequel la pente se situe entre $\alpha_{1grenz}$ et $\alpha_{2grenz}$, le signal stable étant positionné à "1",

la consigne des caractéristiques de consigne stockées pour ledit point de fonctionnement dans le moyen de stockage étant écrasée par la consigne actuelle de la température de surchauffe et étant stockée, lorsque le signal stable est positionné de "0" à "1".

7. Procédé selon la revendication 5 ou 6, la température d'entrée d'air étant détectée à l'entrée de l'évaporateur (13) et les caractéristiques de consigne étant adaptées d'après la température d'entrée d'air détectée.

8. Procédé selon l'une quelconque des revendications 5 à 7, un instant du début de givrage de la surface de l'évaporateur (13) étant déterminé d'après une évaluation d'un décalage des caractéristiques de consigne qui survient en raison d'un comportement variable de transfert de chaleur de l'évaporateur en raison du gel et du givrage de la surface de l'évaporateur (13).

# Fig. 1

# Fig. 2

$$Q_{V\,max} \text{ in } [kW]$$

$$MSS = f\left(Q_V; \Delta\vartheta_{V\ddot{U}}; \text{ etc.}\right)$$

UNSTABLE
RANGE

STABLE
RANGE

$$\Delta\vartheta_{V\ddot{U}} \text{ in } [K]$$

Fig. 3

EP 2 443 404 B1

# Fig. 4

INCREASE
SET VALUE

STORAGE OF
NEW SET
VALUE

T in °C

42
41
43

$\alpha < \alpha_{1grenz}$

$\alpha > \alpha_{2grenz}$

1

44
45

t in s

STARTING
PERIOD (P2)

ADJUSTING
PERIOD (P3)

STABILITY
PERIOD (P4)

EP 2 443 404 B1

# Fig. 5

EP 2 443 404 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4523435 A
- DE 3713869 C2
- DE 19506143 C2
- WO 2009039850 A1